# EUROPEAN PATENT APPLICATION

(11) **EP 4 832 382 A1**
(43) Date of publication of application: **28.10.2026**
(21) Application number: 24914786.9
(22) Date of filing: 29.07.2024
(51) Int. Cl.: H04L 1/00

(54) **SEMANTIC COMMUNICATION METHOD AND APPARATUS, AND STORAGE MEDIUM**

(30) Priority: 04.01.2024 CN 202410029099
(71) Applicant: ZTE Corporation, Shenzhen, Guangdong 518057 (CN)
(72) Inventor: FENG, Yulong, Shenzhen, Guangdong 518057 (CN); XU, Jin, Shenzhen, Guangdong 518057 (CN); HU, Liujun, Shenzhen, Guangdong 518057 (CN); YU, Guanghui, Shenzhen, Guangdong 518057 (CN)
(74) Representative: Ziebig Hengelhaupt Intellectual Property Attorneys Patentanwaltskanzlei PartGmbB
(86) International application number: PCT/CN2024/108121
(87) International publication number: WO 2025/145564

(57) **Abstract**

The embodiments of the present disclosure relate to the technical field of communications. Provided are a semantic communication method and apparatus, and a storage medium, which can realize matching between semantic features and channel features. The semantic communication method comprises: a coding end acquiring original information, and performing semantic coding on the original information on the basis of channel feature parameters to obtain first semantic feature information, wherein the first semantic feature information is used for representing semantic features of the original information, and the coding end sending the first semantic feature information; and a decoding end acquiring second semantic feature information obtained after the first semantic feature information is transmitted via a channel, and obtaining decoding information on the basis of the second semantic feature information.

## Description

The present disclosure claims priority to Chinese Patent Application No. 202410029099.1, filed on January 4, 2024, the entire contents of which are incorporated herein by reference.

### TECHNICAL FIELD

The present disclosure relates to the technical field of communications, and in particular, to a semantic communication method and apparatus, and a storage medium.

### BACKGROUND

With the continuous development of communication technologies, classical communications have almost reached their limits, but still fail to meet the requirements of high data volumes in scenarios such as mixed reality and immersive communications, etc. Furthermore, with the continuous development of artificial intelligence (AI) technologies, the requirements for communication data volumes will further increase, and the demand for intelligence in communication processes will become stronger and stronger. To cope with the huge data volume requirements and to seamlessly connect with various future AI applications, semantic communication has emerged.

In current training of semantic communication, a semantic communication codec is generally obtained by end-to-end training. Such a training approach does not consider the impact of various factors in an actual transmission process on the semantic communication, and may affect the performance of the semantic communication.

### SUMMARY

Embodiments of the present disclosure provide a semantic communication method and apparatus, and a storage medium, which may implement matching between semantic features and channel features.

In one aspect, a semantic communication method is provided, which is applied to an encoding end. The semantic communication method includes: acquiring original information; performing semantic encoding on the original information based on a channel feature parameter to obtain first semantic feature information, where the first semantic feature information is used for characterizing a semantic feature of the original information; and sending the first semantic feature information.

In another aspect, a semantic communication method is provided, which is applied to a decoding end. The semantic communication method includes: acquiring second semantic feature information, where the second semantic feature information is information obtained through channel transmission from first semantic feature information sent from an encoding end, the first semantic feature information matches a channel feature parameter, and the first semantic feature information is used for characterizing a semantic feature of original information; and obtaining decoding information based on the second semantic feature information.

In yet another aspect, a communication apparatus is provided, where the communication apparatus includes an acquisition module and a sending module. The acquisition module is configured to acquire original information. The acquisition module is further configured to perform semantic encoding on the original information based on a channel feature parameter to obtain first semantic feature information. The first semantic feature information is used for characterizing a semantic feature of the original information. The sending module is configured to send the first semantic feature information.

In yet another aspect, a communication apparatus is provided, where the communication apparatus includes an acquisition module. The acquisition module is configured to acquire second semantic feature information. The second semantic feature information is information obtained through channel transmission from first semantic feature information sent from an encoding end. The first semantic feature information matches a channel feature parameter, and the first semantic feature information is used for characterizing a semantic feature of original information. The acquisition module is further configured to obtain decoding information based on the second semantic feature information.

In yet another aspect, a computer-readable storage medium is provided, where a computer program instruction is stored on the computer-readable storage medium, in a case where the computer program instruction is performed by the processor, the semantic communication method according to any one of the above-mentioned aspects is implemented.

In yet another aspect, a computer program product is provided, where the computer program product includes computer program instructions, when the computer program instructions are executed, the semantic communication method according to any one of the above-mentioned aspects is implemented.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a structural schematic diagram of a DeepJSCC model according to some embodiments of the present disclosure.
FIG. 2 is a structural schematic diagram of an NTSCC model according to some embodiments of the present disclosure.
FIG. 3 is a structural schematic diagram of a VSCC model according to some embodiments of the present disclosure.
FIG. 4 is a structural schematic diagram of a communication system according to some embodiments of the present disclosure.
FIG. 5 is a flowchart of a semantic communication method according to some embodiments of the present disclosure.
FIG. 6 is a flowchart of another semantic communication method according to some embodiments of the present disclosure.
FIG. 7 is a structural schematic diagram involved in a semantic communication method according to some embodiments of the present disclosure.
FIG. 8 is a structural schematic diagram involved in another semantic communication method according to some embodiments of the present disclosure.
FIG. 9 is a flowchart of yet another semantic communication method according to some embodiments of the present disclosure.
FIG. 10 is a flowchart of yet another semantic communication method according to some embodiments of the present disclosure.
FIG. 11 is a flowchart of model fine-tuning in a semantic communication method according to some embodiments of the present disclosure.
FIG. 12 is a schematic diagram of composition of a communication apparatus according to some embodiments of the present disclosure.
FIG. 13 is a schematic diagram of composition of another communication apparatus according to some embodiments of the present disclosure.
FIG. 14 is a structural schematic diagram of a communication apparatus according to some embodiments of the present disclosure.

### DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that, in the present disclosure, the words "exemplary/exemplarily" or "for example" are used to present an example, an illustration, or a description. Any embodiment or design scheme described with the words "exemplary/exemplarily" or "for example" in the present disclosure should not be construed as being more preferred or advantageous than other embodiments or design solutions. Specifically, the usage of the wordings such as "exemplary/exemplarily" or "for example" is intended to present related concepts in a concrete way.

Hereinafter, terms "first" and "second," etc., are used for descriptive purposes only, and are not to be understood as indicating or implying the relative importance or implicitly indicating a number of indicated technical features. Thus, features limited with wordings like "first" or "second," etc., may explicitly or implicitly include one or more of the feature(s).

In the description of the present disclosure, unless otherwise specified, "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more.

First, relevant terms involved in the present disclosure are explained.
1. A generative adversarial network (GAN) is a model that performs learning by having two neural networks compete with each other. The generative adversarial network is capable of performing learning of a generation task without using labeled data. The generative adversarial network generally consists of a generator and a discriminator. The generator randomly samples from a latent space as an input, and its output result needs to mimic real samples in a training set as much as possible. The input of the discriminator is a real sample or the output of the generator, and its purpose is to discriminate the output of the generator from the real samples as much as possible. The generator and the discriminator compete with each other and continuously learn, with a final purpose of making it impossible for the discriminator to determine whether the output result of the generator is real.
2. A variational auto encoder (VAE), similar to the generative adversarial network, is created to solve data generation problems. In an auto encoder structure, data is usually required to be input, and generated data is the same as the input data. However, it is generally desired that the generated data has a certain degree of difference, which requires inputting a random vector and the model is capable of learning the stylized characteristics of generated images. Therefore, in subsequent research, a generative adversarial network structure that takes a random vector as an input to generate specific samples was created. Similarly, a variational auto encoder takes random samples from a specific distribution as an input, and is capable of generating corresponding images. From this aspect, the goal of the variational auto encoder is similar to that of the generative adversarial network. However, the variational auto encoder does not require a discriminator, but uses an encoder to estimate a specific distribution.
3. Semantic communication is a communication technology that takes a task as a subject, and first performs understanding and then performs transmission. In the semantic communication, selective feature extraction, compression and transmission are first performed on an original signal, and then semantic-level information is used for communication. This technology is capable of greatly improving the transmission efficiency of a communication system.

The semantic communication is based on the powerful nonlinear fitting capability of an artificial neural network (ANN), and further data compression is performed for a semantic dimension of a source. The implementation of the semantic communication generally adopts an architecture of a generative adversarial network or a variational auto encoder. In addition, due to the particularity of ANN training, a semantic communication codec is generally obtained by end-to-end training, i.e., implementing the semantic communication by means of joint source channel coding (JSCC).

On the one hand, the semantic communication is based on a JSCC framework, and by implementing source coding and channel coding jointly, in a case of a limited code length or source distortion, correlation between the source and the channel in the semantic dimension is eliminated, thereby obtaining a further communication gain, breaking a communication rate limit of a classic separation framework, and increasing a theoretic transmittable data amount of the channel. On the other hand, the semantic communication technology based on ANN obtains similar structural information from a source data distribution and a channel transition probability distribution, summarizes the information into a knowledge base, and performs further compression (encoding) and expansion (decoding) on the source through the knowledge base, thereby achieving more information transmission in the semantic dimension.

However, although a JSCC communication architecture is adopted, due to the uninterpretability of ANN, it is impossible to accurately model to represent a gain obtained by the semantic communication from the joint coding. In particular, the current semantic communication implementations are all channel-independent, and there is no variable about the channel in a loss function, i.e., the channel is not considered in the training process, so that a relationship between the channel and the semantic codec cannot be explicitly explained, and it cannot be determined whether the semantic communication is capable of generating a gain at a channel end. Furthermore, since there is no explicit representation of the channel in the loss function, the generalization of the semantic codec is poor, and it is also impossible to perform fine-tuning according to different channel features to cope with different channel changes.

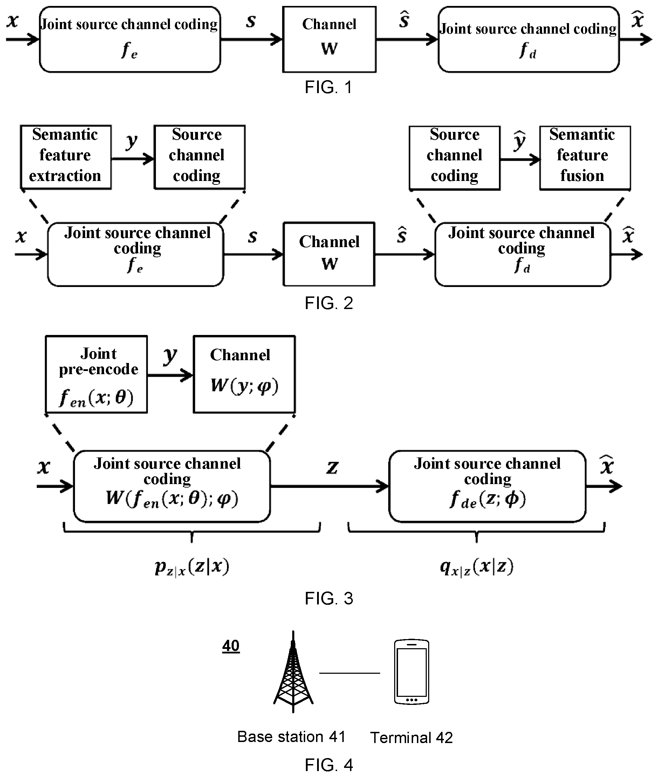

The following description is given by taking a DeepJSCC model conforming to the JSCC communication architecture as an example. FIG. 1 is a structural schematic diagram of a DeepJSCC model according to the embodiments of the present disclosure. In the model, a joint source channel coding (semantic encoder) is used as a discriminator of a deep convolutional generative adversarial network (DCGAN), and is implemented by a convolution layer. A joint source channel decoding (semantic decoder) is used as a generator of the DCGAN, and is implemented by a deconvolution layer.

The model is essentially based on an auto encoder (AE) framework, where the source coding and the channel coding adopt a joint coding manner and are implemented based on the discriminator of the DCGAN, and the channel decoding and the source decoding adopt a joint decoding manner and are implemented based on the generator of the DCGAN.

A loss function during training of the model is a mean square error (MSE) of input data and output data: $L = {E}_{x ∼ {p}_{x} \left(x\right)} {\left‖x-\hat{x}\right‖}^{2}$

In the formula, *L* represents the loss function, x represents the input data, *x̂* represents the output data, and *E*_{*x*~*Px*}(*x*) represents the expectation in a case where *x* follows the probability distribution *Pₓ*(*x*).

The model has the following two aspects of problems. On the one hand, the model is based on a fixed-length coding concept, and does not consider that different sources may have semantic feature information of different lengths, so that a problem of variable-length coding needs to be solved. On the other hand, the model is based on an AE architecture to extract semantic feature information in a source, but in a modeling process, the channel is not modeled, and a channel feature parameter is not reflected in the loss function, so that a source feature cannot be well adapted to the channel feature parameter.

In the related arts, a nonlinear transform source channel coding (NTSCC) model is proposed to solve the problem of variable-length coding. Based on the DeepJSCC model, the NTSCC model additionally adds a semantic feature extraction module and a semantic feature fusion module for the source, which is implemented by using a nonlinear source coding technology, and a structure thereof is shown in FIG. 2.

In the NTSCC model, by adding the semantic feature extraction module, nonlinear semantic information fitting and modeling are capable of being completed for different sources, thereby obtaining a coding rate determined by source semantics, and finally obtaining a semantic coding. The semantic feature extraction module is implemented by means of nonlinear compression, and is capable of being implemented based on architectures such as a Transformer and a neural network, thereby implementing transmission of texts or images.

However, in the modeling process of the NTSCC model, the modeling of the channel is still not considered. A loss function of the model is obtained based on a loss function of a VAE model, i.e., a KL divergence of a joint distribution. However, in a derivation process, the channel is regarded as a constant, so that a posterior probability for a channel output value is regarded as a constant, causing the VAE model to degenerate into an AE model as a whole, and a final loss function thereof is: $L = {E}_{x ∼ {p}_{x} \left(x\right)} \left[\begin{matrix}{\sum }_{i} - {η}_{i} log {p}_{{y}_{i}} \left({y}_{i}\right) + {β}_{M} {{\left‖x-\hat{x}\right‖}_{2}}^{2} \\ + {β}_{L} {d}_{LPIPS} \left(x, \hat{x}\right) + {β}_{D} \left(-log D\left(\left.\hat{x}\right|\hat{y}\right)\right)\end{matrix}\right]$
where *nᵢ*, *β_{M}*, *β_{L}*, *β_{D}* represent constants (weight coefficients), d*_{LPIPS}*, D represents two indicators for measuring image similarity, d*_{LPIPS}* represents a distance of a learned perceptual image patch similarity (LPIPS), D represents a distance between two images output by a discriminator of a cGAN (conditional GAN), *i* represents an image sample serial number, x represents an original image input, *x̂* represents a received image output, *y* represents a semantic feature extraction output, and *ŷ* represents a semantic feature obtained after rate matching and channel transmission. Therefore, the NTSCC model also does not truly implement modeling of the semantic communication by adding the channel, but only performs further fitting of semantic feature information for the source.

In view of the problems existing in the above models, in order to take the channel into consideration in the semantic communication, to better explain a role of the channel in JSCC, and also to eliminate a correlation between the source and the channel in the semantic dimension to further explore the potential of the semantic communication, the present disclosure proposes a semantic communication method based on a variational inference-based JSCC model (also called a variational source-channel coding (VSCC) model). In the semantic communication method, a channel noise distribution becomes a core of the variational inference, and is a key consideration factor for deriving a latent variable. In addition, the derivation of the latent variable is based on an ANN training process, and also needs to consider a source distribution. Therefore, in the semantic communication method, the source feature and the channel feature are considered at the same time, so that an extracted source semantic feature matches a channel noise, thereby effectively reducing a data amount of channel transmission on the premise of ensuring accuracy of the semantic communication.

FIG. 3 is a structural schematic diagram of a VSCC model according to the embodiments of the present disclosure. As shown in FIG. 3, an input of the above VSCC model is x. x first passes through a joint pre-encoder *fₑₙ*(*x*;*θ*) to obtain a codeword *y*, wherein *θ* is a trainable parameter of the joint pre-encoder. Then, the codeword passes through a channel, and an output is denoted as *z* (i.e., a latent variable). Herein, *z* = *W*(*y*;*φ*), a mapping function corresponding to channel input and output is denoted as *W*(*y*;*φ*), wherein *φ* represents a related parameter of the mapping function. Finally, the codeword passes through a joint decoder *f_{de}*(*z*;*ϕ*), wherein *ϕ* is a trainable parameter of the joint decoder, thus to obtain a final output *x̂*.

In order to train the codec in the above model, mathematical modeling needs to be performed on the model. As shown in FIG. 3, in the model, data flow undergoes two changes, one is joint source channel coding, and the other is joint source channel decoding, and these two changes are capable of being described by posterior probabilities *p*_{*z*|*x*}(*z* | *x*) and *q*_{*x*|*z*} (*x* | *z*) shown in the figure.

In the VSCC model, a purpose is to make a distribution *q_{x̂}*(*x̂*) of information *x̂* obtained by a decoding end (information sink) be as close as possible to a distribution *pₓ*(*x*) of a message *x* sent from an encoding end (source), so as to achieve a purpose of semantic communication. It should be noted that in a case where *q_{x̂}*(*x̂*) and *pₓ*(*x*) are close, data sampled from both may be considered as *x* , so that *qₓ*(*x*) is capable of being used instead of *q_{x̂}*(*x̂*) for subsequent derivation.

In order to achieve the purpose of making the two distributions close, a KL divergence is capable of being used to measure a distance between the distributions, so as to minimize the KL divergence between the source and the information sink, that is: $min KL \left(\left.{p}_{x}\left(x\right)\right‖{q}_{x}\left(x\right)\right)$ (1)

Under a assumption condition of the VSCC model, the above formula (1) is capable of being further derived through a KL divergence of a joint probability density, because the KL divergence of the joint probability density is an upper bound of the KL divergence of marginal distributions, that is: $\begin{matrix}KL \left({p}_{x , z}\left.\left(x, z\right)\right‖{q}_{x , z}\left(x, z\right)\right) \\ = KL \left({p}_{x}\left.\left(x\right)\right‖{q}_{x}\left(x\right)\right) + \int {p}_{x} \left(x\right) KL \left({p}_{\left.z\right| x}\left.\left(\left.z\right|x\right)\right‖{q}_{\left.z\right| x}\left(\left.z\right|x\right)\right) dx \\ \geq KL \left({p}_{x}\left.\left(x\right)\right‖{q}_{x}\left(x\right)\right)\end{matrix}$ (2)

In the formula, *p_{x,z}*(*x,z*) and *q_{x,z}*(*x,z*) represent the joint distribution of x and z from the perspective of the joint encoder/decoder.

Therefore, the KL divergence of the marginal distributions (i.e., formula (1)) is capable of being indirectly optimized by a minimization formula (2), and formula (2) is capable of being further optimized based on a variational inference principle: $\begin{matrix}min KL \left({p}_{x , z}\left.\left(x, z\right)\right‖{q}_{x , z}\left(x, z\right)\right) \\ = min ∬ {p}_{x} \left(x\right) {p}_{\left.z\right| x} \left(\left.z\right|x\right) log \frac{{p}_{x} \left(x\right) {p}_{\left.z\right| x} \left(\left.z\right|x\right)}{{q}_{x} \left(x\right) {q}_{\left.z\right| x} \left(\left.z\right|x\right)} dxdz \\ = min {E}_{x ∼ {p}_{x} \left(x\right)} \int {p}_{\left.z\right| x} \left(\left.z\right|x\right) \left[log {p}_{x}\left(x\right)+log\frac{{p}_{\left.z\right| x} \left(\left.z\right|x\right)}{{q}_{x} \left(x\right) {q}_{\left.z\right| x} \left(\left.z\right|x\right)}\right] dz \\ = min {E}_{x ∼ p \left(x\right)} \int {p}_{\left.z\right| x} \left(\left.z\right|x\right) l og \frac{{p}_{\left.z\right| x} \left(\left.z\right|x\right)}{{q}_{x} {\left(x\right)}_{\left.z\right| x} q \left(\left.z\right|x\right)} dz + c\end{matrix}$ (3) where c = *E*_{*x*~*px*}(*x*) log *pₓ*(*x*), since *pₓ*(*x*) is a known fixed input message distribution, it is a constant, and does not play a role in the training process of the joint codec of the VSCC model, so that it is capable of being discarded. The formula is further derivated as: $\begin{matrix}min KL \left({p}_{x , z}\left.\left(x, z\right)\right‖{q}_{x , z}\left(x, z\right)\right) \\ ⇔ min {E}_{x ∼ {p}_{x} \left(x\right)} \int {p}_{\left.z\right| x} \left(\left.z\right|x\right) log \frac{{p}_{\left.z\right| x} \left(\left.z\right|x\right)}{{q}_{z} \left(z\right) {q}_{\left.x\right| z} \left(\left.x\right|z\right)} dz \\ = min {E}_{x ∼ {p}_{x} \left(x\right)} \left[KL\left({p}_{\left.z\right| x}\left.\left(\left.z\right|x\right)\right‖{q}_{z}\left(z\right)\right)+{E}_{z ∼ {p}_{\left.z\right| x} \left(\left.z\right|x\right)}\left(-log {q}_{\left.x\right| z}\left(\left.x\right|z\right)\right)\right]\end{matrix}$ (4)

In formula (4), a first term corresponds to the joint encoder *p*_{*z*|*x*}(*z* | x), a second term corresponds to the joint decoder *q*_{x|z}(*x* | *z),* and *q_{z}*(*z*) represents a distribution function of z. Based on the formula (4), the embodiments of the present disclosure propose a semantic communication method capable of fusing a source feature and a channel feature.

In the embodiments of the present disclosure, a network architecture of a mobile communication system (including but not limited to 5G and future 6G mobile communication systems) may include an encoding end and a decoding end. In some examples, the encoding end may be a base station, and the decoding end may be a terminal (e.g., UE (user equipment)). In other examples, the encoding end may be a UE, and the decoding end may be a base station, which is not limited in the embodiments of the present disclosure.

The following description is given by taking an example in which the encoding end is a base station and the decoding end is a terminal.

FIG. 4 is a structural schematic diagram of a communication system according to the embodiments of the present disclosure. As shown in FIG. 4, the communication system 40 includes a base station 41 and a terminal 42. The base station 41 and the terminal 42 may be connected through a wireless network.

In some embodiments, the base station 41 is configured to provide a radio access service for the terminal 42. For example, one base station 41 provides a service coverage area (also referred to as a cell). The terminal 42 entering the area is capable of communicating with the base station 41 through a wireless signal, so as to receive the radio access service provided by the base station 41.

In some embodiments, the base station may be a millimeter wave base station, an evolution nodeB (eNB), a next generation nodeB (gNB), a transmission and reception point (TRP), a transmission point (TP), or a certain node in another type. Based on a size of a provided service coverage area, the base station 41 may further be classified into a macro base station for providing a macro cell, a pico base station for providing a pico cell, or a femto base station for providing a femto cell. With the continuous evolution of wireless communication technologies, a future base station may also adopts other names. A signal coverage range of the base station 41 also includes a near-field and a far-field, and the terminal 42 may be located in the near-field range or far-field range.

In some embodiments, the terminal 42 may be a device with wireless transceiving functions (such as a mobile phone, a tablet, a wearable device, a vehicle-mounte device, a augmented reality (AR)/virtual reality (VR) device, a laptop, an ultra mobile personal computer (UMPC), a net-book, a personal digital assistant (PDA), etc.). A type of the terminal 42 is not limited in the embodiments of the present disclosure.

It should be understood that FIG. 4 is an exemplary structural diagram, and the number of devices included in the communication system shown in FIG. 4 is not limited, such as the number of base stations and the number of terminals are not limited. Furthermore, in addition to the devices shown in FIG. 4, the communication system shown in FIG. 4 may further include other devices, which is not limited thereto.

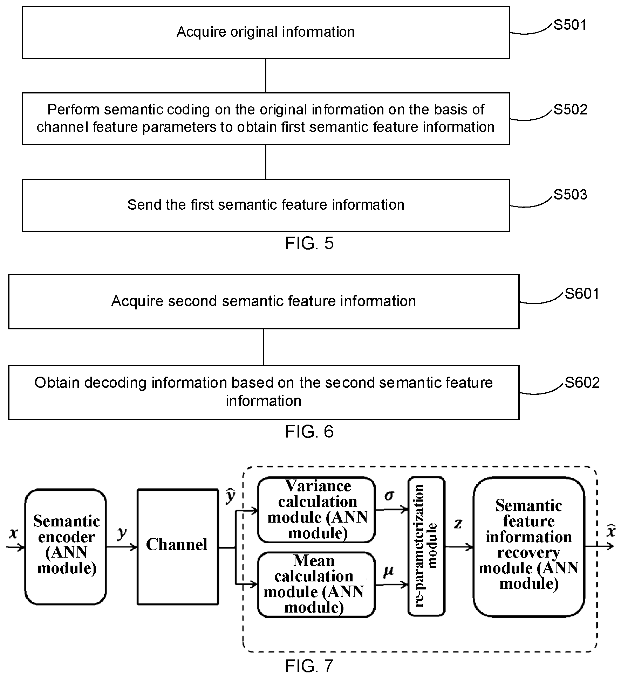

FIG. 5 is a flowchart of a semantic communication method according to the embodiments of the present disclosure. The semantic communication method provided in the present disclosure may be applied to an encoding end, and may be exemplarily applied to the base station of the communication system shown in FIG. 4.

As shown in FIG. 5, the semantic communication method provided in the present disclosure, for example, may include the following S501 to S503.

In S501, original information is acquired.

In S502, semantic encoding is performed on the original information based on a channel feature parameter to obtain first semantic feature information.

In S503, the first semantic feature information is sent.

The first semantic feature information is used for characterizing a semantic feature of the original information.

In the embodiments of the present disclosure, a data amount of the first semantic feature information is less than a data amount of the original information, which is beneficial for reducing a transmission overhead.

In some embodiments, the original information may be control signaling or service data, which is not limited.

In some embodiments, the channel feature parameter includes at least one of: a channel noise variance or channel state information. The channel state information includes at least one of: a signal-to-noise ratio (SNR), a signal to interference plus noise ratio (SINR), a channel matrix, a channel quality indication (CQI), or a reference signal received quality (RSRQ).

In some embodiments, the channel state information is obtained by measuring a pilot signal.

In some embodiments, the above S502 may be implemented as that: the encoding end may perform the semantic encoding on the original information based on the channel feature parameter to obtain the first semantic feature information.

In some embodiments, encoding end performing the semantic encoding on the original information based on the channel feature parameter to obtain the first semantic feature information, for example, may be implemented as that: the encoding end may input the original information into an encoder, and obtains the first semantic feature information by the encoder performing the semantic encoding on the original information based on the channel feature parameter.

In the embodiments of the present disclosure, the above encoder may be called a semantic encoder or have another name, which is not limited.

**It** should be understood that the semantic encoding here means re-arranging the original message according to a channel transition probability distribution. The semantic encoding process is: encoding the original message data into the first semantic feature information, where variables of the first semantic feature information in each dimension approximate the channel transition probability distribution, but in a subsequent process, after variables in all dimensions pass through the channel, second semantic feature information is obtained, the second semantic feature information is also a latent variable in variational inference, a distribution thereof approximates the channel transition probability distribution, and after the second semantic feature information passes through a decoder matched with the channel, the original message distribution is capable of being recovered.

The first semantic feature information is data that has not been affected by channel noise before passing through the channel and matches the channel transition probability. Matching means that after being transmitted over the channel, the second semantic feature information approximating the channel transition probability distribution is capable of being obtained. In some embodiments, the encoder may be obtained by training by the encoding end itself, or may be configured to the encoding end after being trained by another node (for example, a core network element or a server).

In some embodiments, the above encoder (also called a semantic encoder) may be obtained by training through a loss function obtained based on variational inference, and the loss function includes a regularization term and a reconstruction term. The content of the loss function may refer to the related description of Embodiment 1 or Embodiment 2 below, and detailed description is not provided herein.

In some embodiments, the above regularization term may be determined based on a source feature parameter and the channel feature parameter. The source feature parameter is used for characterizing a distribution feature of information sent from a source. The channel feature parameter is used for characterizing a channel transition probability distribution feature. The content of the regularization term may refer to the related description of Embodiment 1 or Embodiment 2 below, and detailed description is not provided herein.

In some embodiments, a distribution feature of a latent variable in the variational inference is a channel state transition probability distribution feature.

In some embodiments, the above reconstruction term may be determined based on the source feature parameter and an information sink feature parameter. The source feature parameter is used for characterizing a distribution feature of information sent from a source. The information sink feature parameter is used for characterizing a distribution feature of information received by an information sink. The content of the reconstruction term may refer to the related description of Embodiment 1 or Embodiment 2 below, and detailed description is not provided herein.

In some scenarios, during a plurality of communication processes, the channel may undergo some slight changes. At this time, it is necessary to continuously transmit a pilot signal to obtain corresponding channel information, and then fine-tune a trained semantic codec according to the change of the channel, to re-achieve matching with the changed channel.

In the embodiments of the present disclosure, since the first semantic feature information extracted from the original information matches the channel feature parameter, stability of the first semantic feature information in a channel transmission process is ensured, which is beneficial for improving the communication efficiency of the semantic communication.

FIG. 6 is a flowchart of another semantic communication method according to the embodiments of the present disclosure. The semantic communication method provided in the present disclosure is applied to a decoding end, and exemplarily may be applied to the terminal of the communication system shown in FIG. 4.

As shown in FIG. 6, the semantic communication method provided in the present disclosure, for example, may include the following S601 and S602.

In S601, second semantic feature information is acquired.

In S602, decoding information is obtained based on the second semantic feature information.

In some embodiments, the second semantic feature information is information obtained through channel transmission from first semantic feature information sent from an encoding end, and the first semantic feature information matches a channel feature parameter.

In some embodiments, the above S602 may be implemented as: performing semantic decoding on the second semantic feature information based on the channel feature parameter to obtain the decoding information.

In some embodiments, the decoding end performing the semantic decoding on the second semantic feature information based on the channel feature parameter to obtain the decoding information may be implemented as: inputting the second semantic feature information into a decoder, and obtaining the decoding information by the decoder performing the semantic decoding on the second semantic feature information based on the channel feature parameter.

**It** should be understood that the semantic decoding here means decoding the second semantic feature information according to the channel transition probability distribution. The semantic decoding process is: after the second semantic feature information is decoded by the decoder matched with the channel, recovering the decoded information as original message distribution. The second semantic feature information is data that approximates the channel transition probability distribution after passing through the channel. The decoder matched with the channel refers to a decoder trained by a loss function including the channel feature parameter.

In the embodiments of the present disclosure, the above decoder may be called a semantic decoder or have another name, which is not limited.

In some embodiments, the decoder may be obtained by training by the decoding end itself, or may be configured to the decoding end after being trained by another node (for example, a core network element or a server).

In some embodiments, the decoder is obtained by training through a loss function obtained based on variational inference, and the loss function includes a regularization term and a reconstruction term.

The related description of the regularization term and the reconstruction term in the loss function may refer to the related description of the encoding end, or the related description below, and details are not repeatedly described herein.

In some embodiments, the decoder includes a latent variable calculation module, a re-parameterization module and a semantic feature information recovery module which are connected in sequence. The latent variable calculation module is configured to extract a latent variable in the second semantic feature information. The re-parameterization module is configured to perform re-parameterization processing on the latent variable. The semantic feature information recovery module is configured to perform semantic decoding processing on the re-parameterization processed latent variable to obtain the decoding information.

The embodiments of the present disclosure include a semantic communication method based on a VSCC model. In the semantic communication method, matching between a source and a channel is implemented, and through matching of distribution features of the two, extraction of semantic feature information is performed, to finally obtain a semantic encoder and a semantic decoder matched with the channel. For example, the semantic encoder uses a channel noise distribution as a latent variable distribution in variational inference, performs semantic segmentation on a source input to obtain semantic feature information, and the semantic decoder recovers the received semantic feature information according to a corresponding semantic segmentation manner, to finally complete communication.

The above encoder and a corresponding decoder thereof are described in detail below in combination with embodiments and the accompanying drawings of the description. Embodiment 1 and Embodiment 2 are described by taking a Gaussian channel as an example, and Embodiment 3 and Embodiment 4 are described by taking a general channel as an example.

### Embodiment 1

This embodiment proposes a semantic encoding method for a Gaussian channel, and a model thereof is as shown in FIG. 7. As shown in the structure of FIG. 7, the semantic encoder is implemented in a form of a joint encoder, and the joint encoder may be implemented by using an ANN module. The ANN module may be implemented by a Transformer layer, a CNN (convolutional neural network) layer, an RNN (recurrent neural network) layer, or a Dense (fully connected) layer, or the like, so as to implement information transmission in different modalities. In a data forward propagation process, original information *x* is encoded by the semantic encoder, to obtain first semantic feature information *y* having a data amount less than a data amount of the original information x .

First, the original information x passes through the semantic encoder, and after being trained by the loss function of variational inference, the encoder mainly has two aspects of encoding features, i.e., a regularization term and a reconstruction term.

On the one hand, the encoder performs semantic encoding on the original information x towards a channel noise distribution direction, so as to obtain the first semantic feature information y that is capable of matching the channel feature parameter. The capability is determined by the first term in the above formula (4), and may be called a regularization term. The term may make an encoding latent variable tend to the channel noise distribution, in other words, the term may enable the encoder to use the channel noise distribution to divide and extract a latent variable from input information, so that the encoder tends to use the channel feature parameter to perform semantic feature extraction on a source.

In an implementation, in order to achieve the above encoding effect, assumptions need to be made on a posterior probability and a prior probability in the regularization term. For the posterior probability *p*_{*z*|*x*}(*z* | *x*), for the convenience of calculation, it is assumed here that output y by the semantic encoder obeys a Gaussian distribution *N*(*µ*₁, *σ*₁²). The channel is an additive white Gaussian noise channel, then a channel output is *ŷ = W* (*fₑₙ*(*x*;*θ*);*φ*) *= fₑₙ*(*x,θ*) *+n,* where *n ~ N*(0, σ₂²) is noise conforming to a Gaussian distribution, and at this time, *φ* = {0, σ₂}. After that, a received message *ŷ* is separately transmitted into a mean calculation module and a variance calculation module, to obtain a model-calculated latent variable mean *µ* and variance σ : $μ = {μ}_{1} + 0$ (5) ${σ}^{2} = {{σ}_{1}}^{2} + {{σ}_{2}}^{2}$ (6)

Then, the mean and the variance are sent to a re-parameterization module, and the re-parameterization module calculates a corresponding latent variable z: $z = ε ⋅ σ + μ$ (7) where *ε* ~ *N(0;1)* is a random number conforming to a standard Gaussian distribution.

**It** should be noted that in this embodiment, what is assumed is a continuous Gaussian distribution. If the latent variable is in discrete distribution, the re-parameterization needs to be performed in a manner of discrete distribution, such as Gumbel-Softmax re-parameterization, which is not repeated herein. Finally, the calculated latent variable is recovered by a semantic decoder, to obtain a recovered message *x̂*.

According to the property of the Gaussian distribution random variable, a posterior probability distribution of the latent variable z received by the decoder is: ${p}_{\left.z\right| x} \left(\left.z\right|x\right) ∼ N \left(μ={μ}_{1}+0,{σ}^{2}={{σ}_{1}}^{2}+{{σ}_{2}}^{2}\right)$ (8)

For the prior probability *q_{z}*(*z*)*,* in order to incorporate an influence of the channel, it may be assumed that a true latent variable z obeys a channel transition probability distribution *N*(0, σ₂²), and thus all assumptions in the variational inference are completed, and a regularization term may be solved by being plugged into a formula: $\begin{matrix}min KL \left(\left.N\left({μ}_{x};{{σ}_{1}}^{2}+{{σ}_{2}}^{2}\right)\right‖N\left(0; {{σ}_{2}}^{2}\right)\right) \\ = min \frac{1}{2} \left(log\frac{{{σ}_{2}}^{2}}{{σ}^{2}}+\frac{{μ}^{2} + {σ}^{2}}{{{σ}_{2}}^{2}}-1\right) \\ = min \frac{1}{2} \left(log\frac{{{σ}_{2}}^{2}}{{σ}^{2}}+\frac{{μ}^{2} + {{σ}_{1}}^{2}}{{{σ}_{2}}^{2}}\right)\end{matrix}$ (9)

Finally, a loss function for training an encoder part may be written as: $min \frac{1}{2} \left(log\frac{{{σ}_{2}}^{2}}{{{σ}_{1}}^{2} + {{σ}_{2}}^{2}}+\frac{{μ}^{2} + {{σ}_{1}}^{2}}{{{σ}_{2}}^{2}}\right)$ (10)

It can be seen that the loss function not only includes a channel noise variance, but also is related to a source distribution. Therefore, the semantic encoder simultaneously considers the source and the channel feature parameter in an encoding process, and may use the channel feature parameter to perform semantic encoding on the source.

On the other hand, the encoder simultaneously considers a distribution feature of the original information and a distribution feature of sink information, so as to implement a better semantic feature extraction manner, which is determined by the second term in formula (4), and may be called a reconstruction term. The reconstruction term makes data at a sending end and data at a receiving end as close as possible, thereby restricting the encoder to perform encoding based on the distribution feature of the original information *x* , and thus retaining source semantic feature information.

In summary, the joint encoder with the channel added may be modeled through variational inference, and a final loss function for training the semantic encoder based on the algorithm model is: $L = min {E}_{x ∼ p \left(x\right)} \left[-log {q}_{\left.x\right| z}\left(\left.x\right|z\right)+\frac{1}{2}\left(log\frac{{{σ}_{2}}^{2}}{{{σ}_{1}}^{2} \left(x; θ\right) + {{σ}_{2}}^{2}}+\frac{μ {\left(x; θ\right)}^{2} + {{σ}_{1}}^{2} \left(x; θ\right)}{{{σ}_{2}}^{2}}\right)\right]$ (17)

During back propagation of a data gradient, a channel noise variance σ₂² needs to be known, and then *µ*, σ, *x̂* of each output is brought into formula (17) for continuous optimization, to complete training of a parameter *θ* of the ANN module in the semantic encoder.

### Embodiment 2

This embodiment proposes a semantic decoding method for a Gaussian channel, and a model thereof is as shown in FIG. 7. As shown in the structure of FIG. 7, the semantic decoder is implemented in a form of a joint decoder, and the joint decoder may be implemented by using an ANN module. The ANN module may be implemented by a Transformer layer, a CNN layer, an RNN layer, a Dense layer, different activation functions, or the like, so as to implement information decoding in different modalities. In a data forward propagation process, encoded information is transmitted through the channel to become second semantic feature information *ŷ* received by a decoding end, and is finally recovered by the semantic decoder to obtain a semantic-level decoded message *x̂*.

For the decoder, on the one hand, the decoder is determined by the first term in formula (4), it may perform decoding considering the channel feature parameter; on the other hand, the decoder is determined by the second term in formula (4), it restricts the decoder to perform decoding based on a distribution feature of the original information *x* .

In order to achieve the above decoding effect, the reconstruction term needs to be determined. The reconstruction term may be solved according to whether a source distribution to be recovered is discrete or continuous, thereby obtaining a semantic communication decoding method for different information modalities. Two examples are given here, for example, it is assumed that a probability distribution of information *x* to be decoded is a Bernoulli distribution, i.e., *x* may only be 1 or 0: ${P}_{x} \left(x\right) = \left\{\begin{matrix}ρ \left(z\right) , & x = 1 \\ 1 - ρ \left(z\right) , & x = 10\end{matrix}\right.$ (11)

The decoder is responsible for calculating a probability *ρ*(*z*) of the above distribution, and at this time, it is equivalent to performing classification prediction on a discrete *x*, which may be used as a semantic communication method for transmitting a binary image. It is assumed that the binary image contains D samples, the second term of the above formula may be calculated as: ${q}_{\left.x\right| z} \left(\left.x\right|z\right) = {Π}^{D} {\left({ρ}_{k}\left(z\right)\right)}^{{x}_{k}} {\left(1-{ρ}_{k}\left(z\right)\right)}^{1 - {x}_{k}}$ (12) ${E}_{x ∼ {p}_{x} \left(x\right)} \left[-log {q}_{\left.x\right| z}\left(\left.x\right|z\right)\right] = {\sum }_{k = 1}^{D} \left({x}_{k} log {ρ}_{k}\left(z\right)+\left(1-{x}_{k}\right)log\left(1-{ρ}_{k}\left(z\right)\right)\right)$ (13)

Further, if a probability distribution of x is assumed to be a discrete distribution with a variable number of D, a semantic communication method for text transmission may be obtained according to a similar calculation process (it is assumed that a number of different characters contained in the text is D), which is not repeated herein.

If a probability distribution of x is assumed to be a Gaussian distribution, a mean and a variance of the distribution may also be calculated by using the decoder to obtain *N*(*µ*(*z*), σ²(*z*)), and at this time, it is equivalent to performing generation on a continuous *x*, which may be used as a semantic communication method for image transmission having D continuous-value sample points, and the above formula (12) may be calculated as MSE: ${q}_{\left.x\right| z} \left(\left.x\right|z\right) = \frac{1}{{\prod }_{k = 1}^{D} \sqrt{2 {{πσ}^{2}}_{\left(k\right)} \left(z\right)}} exp \left(-\frac{1}{2}{\left‖\frac{x - μ \left(z\right)}{σ \left(z\right)}\right‖}^{2}\right)$ (14)

The above formula (13) may be calculated as: ${E}_{x ∼ {p}_{x} \left(x\right)} \left[-log {q}_{\left.x\right| z}\left(\left.x\right|z\right)\right] = \frac{1}{2} {\left‖\frac{x - μ \left(z\right)}{σ \left(z\right)}\right‖}^{2} + \frac{D}{2} ln 2 π + \frac{1}{2} {\sum }_{k = 1}^{D} ln {{σ}^{2}}_{\left(k\right)} \left(z\right)$ (15)

It is assumed that the variance in the input data is a constant, it may be obtained that: $- log {q}_{\left.x\right| z} \left(\left.x\right|z\right) ∼ \frac{1}{2 {σ}^{2}} {\left‖x-μ\left(z\right)\right‖}^{2}$ (16)

It should be noted that in the above solving process for the reconstruction term, description is given by taking one sampling of the latent variable z as an example. Therefore, a mean term for *p*_{*z*|*x*}(*z* | *x*) is omitted previously, and in a complex channel condition, z may need to be sampled multiple times.

In summary, the joint decoder with the channel added may be modeled through variational inference, and a final loss function for training the semantic decoder based on the algorithm model is: $L = min {E}_{x ∼ p \left(x\right)} \left[-log {q}_{\left.x\right| z}\left(\left.x\right|z\right)+\frac{1}{2}\left(log\frac{{{σ}_{2}}^{2}}{{{σ}_{1}}^{2} \left(x; θ\right) + {{σ}_{2}}^{2}}+\frac{μ {\left(x; θ\right)}^{2} + {{σ}_{1}}^{2} \left(x; θ\right)}{{{σ}_{2}}^{2}}\right)\right]$ (17)

During back propagation of a data gradient, a channel noise variance σ₂² needs to be known, and then *µ, σ, x̂* of each output is brought into formula (17) for continuous optimization, to complete training of a parameter *θ* of the ANN module in the semantic decoder.

### Embodiment 3

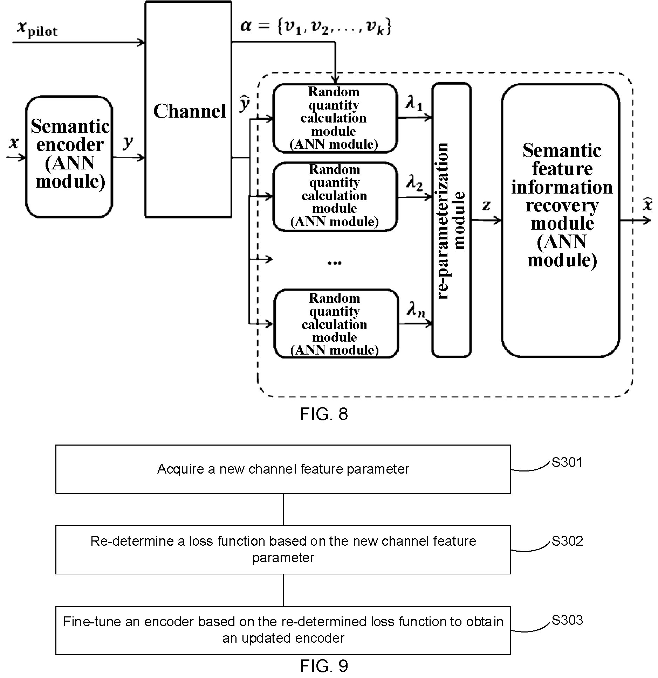

This embodiment proposes a semantic encoding method for a general channel, and a structure of a model thereof is as shown in FIG. 8.

For the general channel, it is assumed that a prior probability distribution p(z) in variational inference is a distribution *F*(*α*) obeyed by a channel transition probability, where *α* = {*v*₁, *v*₂,..., *vₖ*} represents all unknown parameters in the distribution, and k represents a number of vectors v. The parameters may be estimated through a pilot signal: $α = \left\{{v}_{1}\left({x}_{pilot}\right),{v}_{2}\left({x}_{pilot}\right),…,{v}_{k}\left({x}_{pilot}\right)\right\}$ (18)

In addition, it is assumed that an output y of the semantic encoder still obeys a distribution *N*(*µ*₁;σ₁²)*,* and an output *ŷ* after passing through the channel obeys a distribution *G*(*N*(*µ*₁;σ₁²), *F*(*α*(*x*ₚᵢₗₒₜ)), and the distribution is related to both *F*(*α*) and *N*(*µ*₁;σ₁²)*,* and at this time, it may be plugged into the first term of the above formula (4): $min KL \left(G\left.\left(N\left({μ}_{1}; {{σ}_{1}}^{2}\right),F\left(α\left({x}_{pilot}\right)\right)\right)\right‖F\left(α\left({x}_{pilot}\right)\right)\right)$ (19)

The form of formula (19) needs to be solved according to different channel noise distributions.

Further, the output distribution of the semantic encoder can be assumed to be a more generalized distribution. It is assumed that an output y thereof conforms to a distribution *G*(*β*), where *β* = {*λ*₁*, λ*₂,*..., λₙ*} represents unknown parameters in the distribution, and n represents a number of vectors λ. A true parameter *β* is related to the distribution obeyed by *y* and *F*(*α*), and the parameter *β* in the semantic communication method may be solved by an ANN module: $β = \left\{{λ}_{1}\left(x\right),{λ}_{2}\left(x\right),…,{λ}_{n}\left(x\right)\right\}$ (20)

Then, the first term of the above formula (4) may be derived: $min KL \left(\left.G\left(β\left(x\right)\right)\right‖F\left(α\left({x}_{pilot}\right)\right)\right)$ (21)

Thus, a loss function for training corresponding model parameters is obtained: $L = min {E}_{x ∼ p \left(x\right)} \left[-log q\left(\left.x\right|z\right)+KL\left(\left.G\left(β\left(x\right)\right)\right‖F\left(α\left({x}_{pilot}\right)\right)\right)\right]$ (22)

After the parameters in the semantic encoder are trained by the loss function in formula (22), based on the distribution feature of the original information *x*, a corresponding semantic feature information extraction is performed by using a new channel feature parameter *α* = {*v*₁(*xₚᵢₗₒₜ*),*v*₂(*xₚᵢₗₒₜ*)*,...,vₖ*(*xₚᵢₗₒₜ*)}, thereby obtaining a semantic code *y* to be sent.

### Embodiment 4

This embodiment proposes a semantic decoding method for a general channel, and a structure of a model thereof is as shown in FIG. 8.

In the semantic decoder, for the generalized channel, on the basis of Embodiment 2, a latent variable parameter calculation module is required to obtain all parameters *β =* {*λ*₁, *λ*₂*,..., λₙ*} that are capable of representing a latent variable distribution. In addition, a re-parameterization module further needs to be improved, so that the re-parameterization module may sample a latent variable z by using the parameter *β* = {*λ*₁, *λ*₂*,..., λₙ*} based on a distribution *G*(*β*), and finally a semantic feature information recovery module is input to obtain a recovered message *x̂*.

### Embodiment 5

In some application scenarios, during a plurality of communication processes, the channel may undergo some slight changes. At this time, it is necessary to continuously transmit a pilot signal to obtain corresponding channel information, and then fine-tune a trained semantic encoder according to the change of the channel, to re-achieve matching with the changed channel.

As shown in FIG. 9, FIG. 9 is yet another semantic communication method according to the embodiments of the present disclosure, and the method is applied to an encoding end, and the semantic communication method includes S301 to S303.

In S301, a new channel feature parameter is acquired.

As an implementation, the new channel feature parameter is obtained by measuring a pilot signal.

As another implementation, the new channel feature parameter fed back by a decoding end is received.

In some embodiments, the encoding end may periodically measure a pilot signal to acquire a channel feature parameter. Whether the channel changes is determined by comparing channel feature parameters of different periods, and then after it is determined that the channel changes, the method shown in FIG. 9 is performed to obtain an encoder applicable to the changed channel.

In S302, a loss function is re-determined based on the new channel feature parameter.

In S303, an encoder is fine-tuned based on the re-determined loss function to obtain an updated encoder.

In the embodiments of the present disclosure, the loss function is re-adjusted, i.e., the channel feature parameter involved in a regularization term is re-adjusted, and then the encoder is fine-tuned to obtain an encoder applicable to the changed channel (i.e., the updated encoder), so as to ensure the accuracy of the semantic communication in the changed channel.

In an implementation, the fine-tuning of the encoder may be performed according to an overall loss function. In another implementation, the fine-tuning of the encoder may be performed according to the regularization term in the loss function.

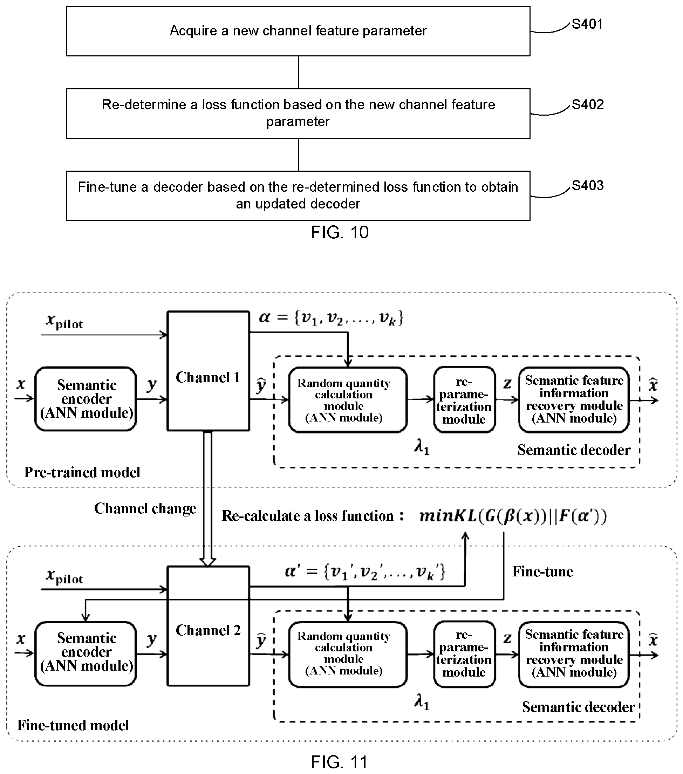

Description is given in combination with FIG. 11. FIG. 11 is a flowchart of model fine-tuning in a semantic communication method according to the embodiments of the present disclosure. As shown in FIG. 11, a pre-trained model in the figure is the encoder obtained by training through the semantic communication method in Embodiment 3 above. In a case where a channel condition changes, according to the description of Embodiment 3, the regularization term in the loss function of the above formula (4) may also change. Therefore, in a case of a channel change, a device for fine-tuning the model (which may be an encoding end or a decoding end, or may be another node) may acquire a new channel feature parameter by measuring a pilot signal. On the one hand, the regularization term is adjusted according to the new channel parameter, and then a related encoding module is fine-tuned according to the adjusted regularization term. Since the regularization term may be calculated according to the channel parameter, a latent variable parameter calculation module of the semantic encoder may be fine-tuned according to the regularization term. On the other hand, the re-parameterization module is adjusted according to the new channel parameter. Finally, a fine-tuned new model is obtained.

### Embodiment 6

In some application scenarios, during a plurality of communication processes, the channel may undergo some slight changes. At this time, it is necessary to continuously transmit a pilot signal to obtain corresponding channel information, and then fine-tune a trained semantic decoder according to the change of the channel, to re-achieve matching with the changed channel.

As shown in FIG. 10, FIG. 10 is yet another semantic communication method according to the embodiments of the present disclosure, and the method is applied to a decoding end, and the semantic communication method includes S401 to S403.

In S401, a new channel feature parameter is acquired.

As an implementation, the new channel feature parameter is obtained by measuring a pilot signal.

As another implementation, the channel feature parameter after the channel change fed back by an encoding end is received.

In some embodiments, the decoding end may periodically acquire a channel feature parameter. Whether the channel changes is determined by comparing channel feature parameters of different periods, and then after it is determined that the channel changes, the method shown in FIG. 10 is performed to obtain a decoding end for the new channel.

In S402, a loss function is re-determined based on the new channel feature parameter.

In S403, a decoder is fine-tuned based on the re-determined loss function to obtain an updated decoder.

In some embodiments, S402 may be implemented as, for example: re-adjusting the loss function based on the new channel feature parameter.

In some embodiments, the semantic communication method further includes: based on the new channel feature parameter, adjusting parameters of a latent variable calculation module and a re-parameterization module to obtain a latent variable calculation module applicable to the changed channel and a re-parameterization module applicable to the changed channel.

In the embodiments of the present disclosure, the decoder is fine-tuned to obtain a decoder applicable to the changed channel, so as to ensure the accuracy of the semantic communication in the changed channel.

In an implementation, the fine-tuning of the decoder may be performed according to a corrected loss function. In another implementation, the fine-tuning of the encoder may be performed according to the regularization term in the loss function.

Continuing to describe with reference to FIG. **11****,** similarly, in a case of a channel change, a device for fine-tuning the model (which may be an encoding end or a decoding end, or may be another node) may acquire a new channel feature parameter by measuring a pilot signal. On the one hand, the regularization term is adjusted according to the new channel parameter, and then a related encoding module is fine-tuned according to the adjusted regularization term. On the other hand, the re-parameterization module is adjusted according to the new channel parameter. Finally, a fine-tuned new model is obtained.

**It** should be understood that in the modeling process, the channel is regarded as a part of the joint encoder, so the latent variable parameter calculation module is essentially a part of the joint encoder, but it is located in the semantic decoder. By fine-tuning these modules, the matching between the source encoding and the channel may be re-achieved. In addition, the parameter of the re-parameterization module further needs to be re-adjusted according to the new channel parameter.

It should be noted that for a changed channel, both the encoder and the decoder may be fine-tuned, to better ensure the accuracy of the semantic communication. Alternatively, only the encoder may be fine-tuned without fine-tuning the decoder, to reduce the complexity of adjustment.

Since the first term in formula (4) is mainly used for training the semantic encoder, so that source transmission semantics may be matched with the channel feature parameter, the semantic encoder may be fine-tuned through the first term (i.e., the regularization term) in formula (4), thereby achieving semantic communication performance recovery for the changed channel without retraining the entire model.

FIG. 11 is a flowchart of model fine-tuning in a semantic communication method according to the embodiments of the present disclosure. As shown in FIG. 11, a pre-trained model in the figure is the codec obtained by training through the semantic communication method in Embodiment 4 above. In a case where a channel condition changes, according to the description of Embodiment 4, the regularization term in the loss function of the above formula (4) may also change. Therefore, in a case of a channel change, a device for fine-tuning the model (which may be an encoding end or a decoding end, or may be another node) may acquire a new channel parameter by measuring a pilot signal. On the one hand, the regularization term is adjusted to calculate a KL divergence term according to the new channel parameter, and then a related encoding module is fine-tuned according to the KL divergence of the regularization term. Since the KL divergence of the regularization term may be calculated according to the channel parameter, the semantic encoder and the latent variable parameter calculation module in the semantic decoder may be fine-tuned according to the regularization term. On the other hand, the re-parameterization module is adjusted according to the new channel parameter. Finally, a fine-tuned new model is obtained.

In the modeling process, the channel is regarded as a part of the joint encoder, so the latent variable parameter calculation module is essentially also a part of the joint encoder. By fine-tuning these modules, the matching between the source and the channel may be re-achieved. In addition, the parameter of the re-parameterization module further needs to be re-adjusted according to the new channel parameter.

It should be noted that for fine-tuning related modules, one implementation is to fine-tune all related modules. In another implementation, only related modules in the semantic encoder may be fine-tuned, and re-matching with the channel may also be achieved.

In the semantic communication method provided in the embodiments of the present disclosure, the original information is acquired, the semantic encoding is performed on the original information based on the channel feature parameter to obtain the first semantic feature information, and the first semantic feature information is sent. The transmitted first semantic feature information provided in the present disclosure includes the original information to be transmitted, and matches the channel feature parameter. That is to say, in the present disclosure, feature factors of a channel for transmitting data in an actual transmission process are taken into consideration in a codec process of the semantic communication, so that a source feature of the channel transmission in the semantic communication better fits a channel feature, thereby effectively reducing a data amount of the channel transmission on the premise of ensuring the accuracy of the semantic communication.

It can be understood that, in order to implement the above functions, the encoding end and the decoding end include corresponding hardware structures and/or software modules for implementing various functions. Those skilled in the art should easily realize that the present disclosure may be implemented in the form of hardware or a combination of hardware and computer software in combination with algorithms and steps of various examples described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. **It** should be noted that the division of the modules in the embodiments of the present disclosure is illustrated, which is only a logical functional division, and there may be other division manners in an actual implementation. The following is illustrated by adopting a division of each functional module corresponding to each function as an example.

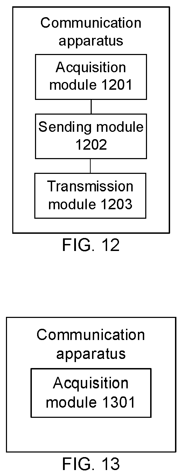

FIG. 12 is a schematic diagram of composition of a communication apparatus according to the embodiments of the present disclosure, and the communication apparatus is capable of performing the semantic communication method provided in the above method embodiments. As shown in FIG. 12, the communication apparatus includes an acquisition module 1201 and a sending module 1202.

The acquisition module 1201 is configured to acquire original information.

The acquisition module 1201 is further configured to perform semantic encoding on the original information based on a channel feature parameter to obtain first semantic feature information, where the first semantic feature information is used for characterizing a semantic feature of the original information.

The sending module 1202 is configured to send the first semantic feature information.

In some embodiments, the channel feature parameter includes at least one of: a channel noise variance or channel state information. The channel state information includes at least one of: a signal-to-noise ratio (SNR), a signal to interference plus noise ratio (SINR), a channel matrix, a channel quality indication (CQI), or a reference signal received quality (RSRQ).

In some embodiments, the channel state information is obtained by measuring a pilot signal.

In some embodiments, the acquisition module 1201 is configured, for example, to perform the semantic encoding on the original information based on the channel feature parameter to obtain the first semantic feature information.

In some embodiments, the acquisition module 1201 is configured, for example, to input the original information into an encoder, and obtain the first semantic feature information by the encoder performing the semantic encoding on the original information based on the channel feature parameter.

In some embodiments, the encoder and a decoder matched with the encoder are obtained by training through a loss function obtained based on variational inference, and the loss function includes a regularization term and a reconstruction term.

In some embodiments, the regularization term is determined based on a source feature parameter and the channel feature parameter. The source feature parameter is used for characterizing a distribution feature of information sent from a source. The channel feature parameter is used for characterizing a channel transition probability distribution feature.

In some embodiments, the above-mentioned communication apparatus further includes a determination module 1203. The acquisition module 1201 is further configured to acquire a new channel feature parameter. The determination module 1203 is configured to re-determine a loss function based on the new channel feature parameter. The acquisition module 1201 is further configured to fine-tune the encoder based on the re-determined loss function to obtain an updated encoder.

In some embodiments, the reconstruction term is determined based on the source feature parameter and an information sink feature parameter. The source feature parameter is used for characterizing a distribution feature of information sent from a source. The information sink feature parameter is used for characterizing a distribution feature of information received by an information sink.

In some embodiments, a distribution feature of a latent variable in the variational inference is a channel state transition probability distribution feature.

FIG. 13 is a schematic diagram of composition of another communication apparatus according to the embodiments of the present disclosure, and the communication apparatus is capable of performing the semantic communication method provided in the above method embodiments. As shown in FIG. 13, the communication apparatus includes an acquisition module 1301.

The acquisition module 1301 is configured to acquire second semantic feature information. The second semantic feature information is information obtained through channel transmission from first semantic feature information sent from an encoding end, the first semantic feature information matches a channel feature parameter, and the first semantic feature information is used for characterizing a semantic feature of original information.

The acquisition module 1301 is further configured to obtain decoding information based on the second semantic feature information.

In some embodiments, the acquisition module 1301 is configured, for example, to perform semantic decoding on the second semantic feature information based on the channel feature parameter to obtain the decoding information. In some embodiments, the channel feature parameter includes at least one of: a channel noise variance or channel state information. The channel state information includes at least one of: a signal-to-noise ratio (SNR), a signal to interference plus noise ratio (SINR), a channel matrix, a channel quality indication (CQI), or a reference signal received quality (RSRQ).

In some embodiments, the channel state information is obtained by measuring a pilot signal.

In some embodiments, the acquisition module 1301 is configured, for example, to input the second semantic feature information into a decoder, and obtain the decoding information by the decoder performing the semantic decoding on the second semantic feature information based on the channel feature parameter.

In some embodiments, the decoder is obtained by training through a loss function obtained based on variational inference, and the loss function includes a regularization term and a reconstruction term.

In some embodiments, the regularization term is determined based on a source feature parameter and the channel feature parameter. The source feature parameter is used for characterizing a distribution feature of information sent from a source. The channel feature parameter is used for characterizing a channel transition probability distribution feature.

In some embodiments, the reconstruction term is determined based on the source feature parameter and an information sink feature parameter. The source feature parameter is used for characterizing a distribution feature of information sent from a source. The information sink feature parameter is used for characterizing a distribution feature of information received by an information sink.

In some embodiments, the acquisition module 1301 is further configured to acquire a new channel feature parameter; re-determine a loss function based on the new ch channel feature parameter; and fine-tune the decoder based on the re-determined loss function to obtain an updated decoder.

In some embodiments, the decoder includes a latent variable calculation module, a re-parameterization module and a semantic feature information recovery module which are connected in sequence. The latent variable calculation module is configured to extract a latent variable in the second semantic feature information, the re-parameterization module is configured to perform re-parameterization processing on the latent variable, and the semantic feature information recovery module is configured to perform semantic decoding processing on the re-parameterization processed latent variable to obtain the decoding information.

In some embodiments, the acquisition module 1301 is configured, for example, to re-adjust the loss function based on the new channel feature parameter.

In some embodiments, the acquisition module 1301 is further configured, for example, to adjust parameters of the latent variable calculation module and the re-parameterization module based on the new channel feature parameter, to obtain an updated latent variable calculation module and an updated re-parameterization module.

In some embodiments, a distribution feature of a latent variable in the variational inference is a channel state transition probability distribution feature.

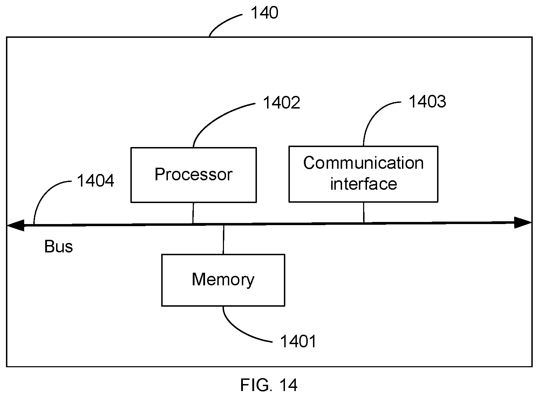

In a case where the functions of the above-mentioned integrated modules are implemented in the form of hardware, another structure of a communication apparatus involved in the above-mentioned embodiments is provided in the embodiments of the present disclosure. As shown in FIG. 14, the communication apparatus 140 includes: a processor 1402 and a bus 1404. In some embodiments, the communication apparatus may further include a memory 1401. In some embodiments, the communication apparatus may further include a communication interface 1403.

The processor 1402 may implement or perform various exemplary logical blocks, modules and circuits described in combination with the embodiments of the present disclosure. The processor 1402 may be a central processor, a general-purpose processor, a digital signal processor, an application specific integrated circuit, a field programmable gate array, or other programmable logic component, a transistor logic component, a hardware assembly, or any combination thereof. The processor 1402 may implement or execute various illustrative logical blocks, modules and circuits described in conjunction with the embodiments of the present disclosure. The processor 1402 may also be a combination that implements computing functions, such as a combination containing one or more microprocessors a combination of a DSP (digital signal processor) and a microprocessor, etc.

The communication interface 1403 is configured to connect to other devices through a communication network. The communication network may be the Ethernet, a radio access network, a wireless local area network (WLAN), or the like.

The memory 1401 may be a read-only memory (ROM) or other types of static storage devices that can store static information and instructions, a random access memory (RAM), or other types of dynamic storage devices that are capable of storing information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

As a possible implementation, the memory 1401 may exist independently from the processor 1402, and the memory 1401 may be connected to the processor 1402 through the bus 1404, and is configured to store instructions or program codes. In a case where the processor 1402 invokes and executes instructions or program codes stored in the memory 1401, the semantic communication method provided in the embodiments of the present disclosure may be implemented.

In another implementation, the memory 1401 may be integrated with the processor 1402.

The bus 1404 may be an extended industry standard architecture (EISA) bus, or the like. The bus 1404 may be classified as an address bus, a data bus, a control bus, or the like. For ease of representation, only one thick solid line is used in FIG. 14 for representing the bus, but it does not indicate that there is only one bus or one type of bus.

In some embodiments, the memory 1401 stores executable instructions that, when executed by the processor 1402, cause the communication apparatus to perform the semantic communication method as described in any embodiment of the above embodiments.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the semantic communication method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the semantic communication method as described in any one of the above-mentioned embodiments.

In the semantic communication technical solutions provided in the embodiments of the present disclosure, the original information is acquired, the semantic encoding is performed on the original information based on the channel feature parameter to obtain the first semantic feature information, and the first semantic feature information is sent. The transmitted first semantic feature information provided in the present disclosure includes the original information to be transmitted, and matches the channel feature parameter. That is to say, in the present disclosure, feature factors of a channel for transmitting data in an actual transmission process are taken into consideration in a codec process of the semantic communication, so that a source feature of the channel transmission in the semantic communication better fits a channel feature, thereby effectively reducing a data amount of the channel transmission on the premise of ensuring the accuracy of the semantic communication.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A semantic communication method, **characterized by** being applied to an encoding end, comprising:
acquiring original information;
performing semantic encoding on the original information based on a channel feature parameter to obtain first semantic feature information, wherein the first semantic feature information is used for characterizing a semantic feature of the original information; and
sending the first semantic feature information.

2. The method according to claim 1, wherein the channel feature parameter comprises at least one of: a channel noise variance or channel state information; and the channel state information comprises at least one of: a signal-to-noise ratio, SNR, a signal to interference plus noise ratio, SINR, a channel matrix, a channel quality indication, CQI, or a reference signal received quality, RSRQ.

3. The method according to claim 2, wherein the channel state information is obtained by measuring a pilot signal.

4. The method according to claim 1, wherein performing the semantic encoding on the original information based on the semantic feature information to obtain the first semantic feature information comprises:
inputting the original information into an encoder, and obtaining the first semantic feature information by the encoder performing the semantic encoding on the original information based on the channel feature parameter;
wherein the encoder is obtained by training through a loss function obtained based on variational inference, and the loss function comprises a regularization term and a reconstruction term.

5. The method according to claim 4, wherein the regularization term is determined based on a source feature parameter and the channel feature parameter; wherein the source feature parameter is used for characterizing a distribution feature of information sent from a source; and the channel feature parameter is used for characterizing a channel transition probability distribution feature.

6. The method according to claim 4, further comprising:
acquiring a new channel feature parameter;
re-determining a loss function based on the new channel feature parameter; and
fine-tuning the encoder based on the re-determined loss function to obtain an updated encoder.

7. The method according to claim 4, wherein the reconstruction term is determined based on a source feature parameter and an information sink feature parameter; wherein the source feature parameter is used for characterizing a distribution feature of information sent from a source; and the information sink feature parameter is used for characterizing a distribution feature of information received by an information sink.

8. A semantic communication method, **characterized by** being applied to a decoding end, comprising:
acquiring second semantic feature information, wherein the second semantic feature information is information obtained through channel transmission from first semantic feature information sent from an encoding end, the first semantic feature information matches a channel feature parameter, and the first semantic feature information is used for characterizing a semantic feature of original information; and
obtaining decoding information based on the second semantic feature information.

9. The method according to claim 8, wherein obtaining the decoding information based on the second semantic feature information comprises:
performing semantic decoding on the second semantic feature information based on the channel feature parameter to obtain the decoding information.

10. The method according to claim 9, wherein the channel feature parameter comprises at least one of: a channel noise variance or channel state information; and the channel state information comprises at least one of: a signal-to-noise ratio, SNR, a signal to interference plus noise ratio, SINR, a channel matrix, a channel quality indication, CQI, or a reference signal received quality, RSRQ.

11. The method according to claim 10, wherein the channel state information is obtained by measuring a pilot signal.

12. The method according to claim 9, wherein performing the semantic decoding on the second semantic feature information based on the channel feature parameter to obtain the decoding information comprises:
inputting the second semantic feature information into a decoder, and obtaining the decoding information by the decoder performing the semantic decoding on the second semantic feature information based on the channel feature parameter;
wherein the decoder is obtained by training through a loss function obtained based on variational inference, and the loss function comprises a regularization term and a reconstruction term.

13. The method according to claim 12, wherein the regularization term is determined based on a source feature parameter and the channel feature parameter; wherein the source feature parameter is used for characterizing a distribution feature of information sent from a source; and the channel feature parameter is used for characterizing a channel transition probability distribution feature.

14. The method according to claim 12, wherein the reconstruction term is determined based on a source feature parameter and an information sink feature parameter; wherein the source feature parameter is used for characterizing a distribution feature of information sent from a source; and the information sink feature parameter is used for characterizing a distribution feature of information received by an information sink.

15. The method according to claim 12, further comprising:
acquiring a new channel feature parameter;
re-determining a loss function based on the new channel feature parameter; and
fine-tuning the decoder based on the re-determined loss function to obtain an updated decoder.

16. The method according to claim 12, wherein the decoder comprises a latent variable calculation module, a re-parameterization module, and a semantic feature information recovery module which are connected in sequence; the latent variable calculation module is configured to extract a latent variable in the second semantic feature information, the re-parameterization module is configured to perform re-parameterization processing on the latent variable, and the semantic feature information recovery module is configured to perform semantic decoding processing on the re-parameterization processed latent variable to obtain the decoding information.

17. The method according to claim 15, wherein re-determining the loss function based on the new channel feature parameter comprises:
re-adjusting the loss function based on the new channel feature parameter.

18. The method according to claim 16, further comprising: adjusting parameters in the latent variable calculation module and the re-parameterization module based on the new channel feature parameter, to obtain an updated latent variable calculation module and an updated re-parameterization module.

19. A communication apparatus, **characterized by** comprising: a memory, a processor, and computer program instructions stored on the memory and capable of being executed on the processor, wherein the processor, upon executing the computer program instructions, implements the method according to any one of claims 1 to 18.

20. A computer-readable storage medium, wherein the computer-readable storage medium comprises computer program instructions that, upon being run on a computer, enable the computer to execute the method according to any one of claims 1 to 18.
